# EUROPEAN PATENT SPECIFICATION

(11) **EP 1 877 244 B1**
(45) Date of publication and mention of the grant of the patent: **30.08.2017**
(21) Application number: 06709895.4
(22) Date of filing: 24.02.2006
(51) Int. Cl.: B32B 1/08, B32B 27/32, F16L 9/12, F16L 9/133, C08K 5/00, C08K 5/053, C08L 23/10, C08L 53/00

(54) **PLASTICS PIPE**
KUNSTSTOFFROHR
TUYAU DE PLASTIQUE

(30) Priority: 01.03.2005 GB 0504181
(43) Date of publication of application: 16.01.2008
(73) Proprietor: Radius Systems Limited, Alfreton, Derbyshire DE55 2JJ (GB)
(72) Inventor: HARGET, David Charles, Bleasby, Notts NG14 7GB (GB); BOWMAN, Jeremy, Chesterfield S40 3NA (GB); RICHARDS, Lawrence, Warwick, Warwickshire CV34 5RY (GB)
(74) Representative: HGF Limited
(86) International application number: PCT/GB2006/000665
(87) International publication number: WO 2006/092567

(56) References cited:
- EP-A- 0 238 140
- EP-A- 1 260 546
- WO-A-2004/016420
- GB-A- 2 297 138
- GB-A- 2 323 556

## Description

This invention relates to plastic pipes and more particularly to a novel composite plastics pipe, a method for its manufacture, and a method for making joints in such a pipe.

In the handling, installation and connection of plastics pipes, the pipe surface is easily damaged. In "no-dig" plastics pipe installation techniques, for example, a tunnel is bored in the ground for the pipe and the pipe is then pushed or pulled through the tunnel into an excavated hole where the next pipe joint is to be made. Installation techniques such as pipe-bursting and slip lining can also introduce significant damage to the pipe surface.

Other modern pipe laying methods can also subject the pipe to substantial bending and tensile forces, both of which can result in a deterioration of the mechanical strength of the pipe. In addition, the useful life of the pipe may be reduced by diffusible materials in the ground, or by environment conditions, for example, exposure to direct sunlight for long periods.

Of greatest concern, is that modern pipe laying methods can result in the outer surface of the pipe becoming scratched and dirty. This is disadvantageous firstly as pipe materials are notch sensitive, in which case any scratches may cause greater damage to occur in the pipe during subsequent handling or use. Secondly, dirt and/or oxidation on the pipe surface may prevent successful welding. The main reason for failure of joints using an electrofusion fitting is that the surface of the pipe is dirty or has become oxidised. For this reason, until recently, the pipe ends always have had to be cleaned and scraped before jointing, for example, with a hand or mechanical scraper. In practice, the cleaning and scraping is often uneven (the underside of the pipe in particular may be treated less carefully), and the quality of the end result depends upon the professional skill of the installer.

In recent years there have been proposals to provide the pipe with a non-adherent skin layer which can be removed in order to permit jointing. Composite pipe constructions of this type are described, for example, in JP3-24392, EP0474583, EP0604907, GB2323556, GB2300456, and WO93/0021.

All of these prior art pipe constructions suffer from the disadvantage that modern pipe laying techniques tend to cause wrinkling, rucking, or at least undesired movement of the non-adherent skin layer relative to the core when the pipe is pushed through the ground or is coiled to facilitate transport of long lengths (up to 100m) of pipe. These proposals have therefore not proved commercially acceptable.

More traditional proposals, wherein a protective skin layer is provided which is strongly adherent to the pipe, do not, of course, overcome the problem of dirt and oxidation on the outer surface, since such skin layers are very difficult to remove without elaborate equipment. The presence of a tightly adherent skin layer can also dramatically lower the impact strength of the plastics pipe.

The first appreciation that the above problems could be solved by using a protective skin layer which is only lightly adherent to the core pipe occurs in GB2297137 and GB2297138.

In GB2297138, for example, there is provided a plastics pipe which comprises an inner core and an outer protective layer bonded thereto, in which the dimensions of the pipe and the protective layer are such that the ratio of the external diameter of the pipe to the thickness of the protective layer is at least 70, preferably at least 100, and the cohesive strength of the outer protective layer, excluding any lines of weakness, at least at the ends of the pipe, is greater than the strength of the adhesive bond between the outer protective layer and the inner core. According to this specification, by a correct choice of the material of the skin layer and the extrusion conditions, it is possible to provide a level of adhesion which still permits clean removal of the skin layer by peeling, whilst preventing rucking or wrinkling of the skin layer during installation and without substantially adversely affecting the mechanical properties of the pipe.

The composite pipe of UK patents GB2297137 and GB2297138 has been commercially extremely successful, but it has been found that under specific conditions of temperature and loading it is difficult to provide a skin layer which has both the required toughness and limited adhesion to the core pipe. Quality control of the base polymer material of the skin layer, and control of the extrusion conditions during manufacture, need to be rigorously maintained if undesirable quantities of scrap are to be avoided. This substantially increases both raw material and manufacturing costs.

In WO 2004/016420 there is described and claimed a plastics pipe which comprises an inner core and an outer removable skin layer bonded thereto,
the outer removable skin layer comprising a polymeric material, chosen for its physical and mechanical properties, and an adhesion-modifying additive,
the adhesion-modifying additive being present in the skin layer in an amount such that the adhesion of the skin layer to the inner core is sufficient to prevent substantial undesired relative movement between the skin layer and the core during installation, but insufficient to prevent the outer skin layer from being cleanly removed by peeling, at least at the ends of the pipe, and insufficient to cause a substantial reduction in the impact strength of the inner core.

The plastics pipe of WO 2004/016420 provides a further improvement in the quality of composite plastics pipes and in many cases highly satisfactory results are obtained. However it has been found that when certain colorants, in particular yellow colorants that indicate that the pipe is for use in the gas industry, are employed in the skin layer, the adhesion of the skin layer to the core can still be too high unless exceptional precautions are taken to control the extrusion process.

A novel composite plastics pipe has now been developed which has the advantages of a plastics pipe with a removable outer protective layer, but which gives improved flexibility in choice of materials, colourants and manufacturing conditions without substantially adversely affecting the mechanical properties of the pipe.

In a first aspect, the invention provides the use, in a plastics pipe which comprises an inner core and an outer removable skin layer bonded thereto, wherein the outer removable skin layer comprises a polymeric material chosen for its physical and mechanical properties,
of a nucleating agent for the polymeric material, the nucleating agent being present in the skin layer in an amount such that the adhesion of the skin layer to the inner core is sufficient to prevent substantial undesired relative movement between the skin layer and the core during installation, but insufficient to prevent the outer skin layer from being cleanly removed by peeling, at least at the ends of the pipe, and insufficient to cause a substantial reduction in the impact strength of the inner core.

In a second aspect, the invention provides a plastics pipe which comprises an inner core and an outer removable skin layer bonded thereto,
the outer removable skin layer comprising a polymeric material, chosen for its physical and mechanical properties,
wherein the skin layer also comprises a nucleating agent for the polymeric material,
the nucleating agent being present in the skin layer in an amount such that the adhesion of the skin layer to the inner core is sufficient to prevent substantial undesired relative movement between the skin layer and the core during installation, but insufficient to prevent the outer skin layer from being cleanly removed by peeling, at least at the ends of the pipe, and insufficient to cause a substantial reduction in the impact strength of the inner core,
wherein the nucleating agent is an organic compound,
with the proviso that the skin layer is substantially free from blue colorants.

In a further aspect, the invention provides a method for the production of a plastics pipe comprising an inner core and an outer removable skin layer bonded thereto, the outer removable skin layer comprising a polymeric material chosen for its physical and mechanical properties, and wherein the outer skin layer also comprises an effective amount of a nucleating agent which is an organic compound, which method comprises co-extruding molten polymeric materials forming the inner core and the outer removable skin layer from one or more extruder dies, bringing the molten polymeric materials together and allowing them to cool, such that, on cooling, the adhesion of the skin layer to the inner core is sufficient to prevent substantial undesired relative movement between the skin layer and the core during installation of the pipe, but insufficient to prevent the skin layer from being cleanly removed by peeling, at least at the ends of the pipe, and insufficient to cause a substantial reduction in the impact strength of the inner core,
with the proviso that the skin layer is substantially free from blue colorants.

In another aspect the invention provides a method of making a joint to a plastics pipe produced according to the use of the first aspect of the invention, or of joining two such plastics pipes, which comprises peeling the skin layer from the region or regions of the pipe to be joined, to expose a clean surface suitable for electrofusion jointing, installing an electrofusion fitting over the clean surface or surfaces of the pipe or pipes and activating the electrofusion fitting to fuse the region or regions of the pipe or pipes thereto.

By "undesired relative movement" in this specification is meant movement or de-bonding of the skin layer relative to the core during directional drilling, pipe bursting, slip lining, or other conventional pipe installation procedures.

By selecting the material of the skin layer on the basis of its physical and mechanical properties and then modifying its adhesive properties with a nucleating agent, we have found that it is possible to improve greatly the consistency of the resultant pipe without sacrificing quality and performance. Thus the properties of the material of the skin layer no longer have to be a compromise between conflicting requirements.

In this specification a "nucleating agent" is defined as a polymer additive that functions by introducing a heterogeneous surface to the super-cooled polymer melt, making crystallization more thermodynamically favourable. As a result of the nucleating effect, the temperature at which the polymer begins to crystallize is increased. In addition, the rate of nucleation and the rate of growth of the crystalline phase are increased so that the overall rate of crystallization is increased. The nucleating agent can also promote the formation of smaller and more numerous spherulites, resulting in increased modulus without sacrificing impact strength, leading to a superior stiffness/impact balance. It is further believed that the adhesion between the high molecular weight polymeric materials of the skin layer and the core is as a result of Van der Waals and/or diffusive bonding, or similar forces, and thus by increasing the temperature (and rate) of crystallisation of the skin layer polymer material it is possible that the interactive forces between the polymer material of the skin layer and the polymer material of the core are reduced and/or that more rapid crystallisation inhibits intermingling of the polymer chains of the skin layer and the core.

Preferably the skin layer also comprises an adhesion modifying additive as defined in WO 2004/016420 in addition to the nucleating agent.

The strength of the adhesive bond between the skin layer and the inner core is preferably at least 0.1 N/mm, more preferably at least 0.2 N/mm, when measured by a rolling drum peel test as described in Appendix 1. The adhesive bond between the skin layer and the inner core is preferably less than 2.0 N/mm, more preferably less than 1.5 N/mm. Very good results have been achieved using an adhesion between the skin layer and the inner core within the range of from 0.3 to 1.5 N/mm, when measured by the above-mentioned rolling drum peel test.

It is likely that any adhesion between the skin layer and the inner core will have some effect upon the impact strength of the plastics pipe, and it is presumably for this reason that prior art proposals (other than GB2297137 and GB2297138) have always sought to avoid adhesion between the skin layer and the core.

Nevertheless, it has been found that the combination of the tough skin layer and the light bonding used in the present invention can still produce a plastics pipe having sufficient impact strength to meet the requirements of all available standards. Moreover improved impact strength over the products of GB2297137 and GB2297138 can also be obtained, in part due to the presence of the nucleating agent. Preferably the strength of the adhesive bond between the skin layer and the inner core is such that the impact strength of the composite plastics pipe is at least 40%, preferably at least 60%, more preferably at least 80% of the impact strength of the inner core without the skin layer.

The inner core and the skin layer of the composite plastics pipe of the present invention can comprise any suitable thermoplastic polymeric materials, consistent with the maintenance of the required properties. Suitable polymeric materials include, for example, olefinically-unsaturated polymers and co-polymers, for example, polyolefins such as polyethylene, polypropylene, polybutene and polybutylene; ethylene and propylene co-polymers, for example, ethylene-vinyl acetate polymers, and propylene-vinyl acetate polymers; halogenated-vinyl polymers such as vinyl chloride polymers and co-polymers; polyamides, for example, nylon 6, nylon 11 and nylon 66; polycarbonates; ABS polymers and ionomer polymers such as Surlyn (RTM). Block co-polymers and blends of any of the above polymers can also be used. The polymeric material can also be cross-linked as required. Suitable cross-linked polymeric materials include, for example, cross-linked polyolefins, for example, cross-linked polyethylene (PEX) and oriented PEX (PEXO).

The inner core of the pipe comprises a polymeric material chosen to be compatible with the particular application and in particular with the fluid material to be conveyed by the pipe. For many applications polyethylene is the preferred material for the inner core. The grade of polyethylene chosen, that is to say, high density, medium density, low density, or linear low density, will depend upon the particular application. Suitable grades of polyethylene for pressure pipe applications, preferably meet the requirements of at least one of prEN 12201-1 (except clause 4.2.1 and the associated pigment or carbon black requirements if an unpigmented material is used, prEN12201-2 (except clause 5.2 and the associated pigment or carbon black requirements if an unpigmented material is used), prEN1555-1 (except clause 4.2.2 and the associated pigment or carbon black requirements if an unpigmented material is used) and prEN1555-2 (except clause 5.2 and the associated pigment or carbon black requirements if an unpigmented material is used).

Any suitable equivalent grade of polyethylene may, of course, also be used. The polyethylene may also be cross-linked, for example, to a cross-link density of from about 60 to 75%.

The skin layer is formed from a polymeric material or a blend of polymeric materials chosen to have good mechanical and physical properties, especially toughness, ductility and low temperature impact strength. Preferred polymeric materials for the skin layer comprise propylene homo- and co-polymers, propylene block co-polymers, and propylene random co-polymers. Preferably the skin layer has a notched Charpy impact strength of at least 1 kJ/m², more preferably at least 2 kJ/m² and most preferably at least 4 kJ/m², when measured using the method of ISO 179/16A at a temperature of -20°C.

Under typical co-extrusion conditions, many polymer material combinations tend to adhere strongly together, and this is generally true for many grades of polyethylene and propylene polymers. In this specification, polymeric materials of the skin layer are termed "adherent polymeric materials", if, but for the presence of the nucleating agent, they would adhere to the core pipe to an extent such that the outer skin layer cannot be peeled from the core pipe, or such that the impact strength of the composite plastics pipe is substantially reduced, or both, when the core pipe and the skin layer are extruded under typical extrusion conditions.

The quantity of nucleating agent in the polymeric material of the skin layer is preferably such that the adhesion to the inner core is below 2.0N/mm and preferably below 1.0N/mm when measured using a rolling drum peel test as described in Appendix 1. The actual quantity of nucleating agent in the skin layer depends on the nucleating agent used, but in general is within the range of from 0.0001% to 16% by weight, more preferably from 0.01% to 8% by weight and most preferably from 0.1% to 4% by weight.

A "nucleating agent" of this specification is an additive that produces, on addition to a polymer material, a higher degree of crystallisation of the polymer material on processing than is achieved on processing the same polymer material (whether it be a homopolymer, a random co-polymer, or a block co-polymer) without the nucleating agent. In general, nucleating agents also increase the temperature at which crystals begin to form. Whether or not a particular additive is a suitable nucleating agent for use in the present invention can be determined, for example, by determining the peak crystallization temperature (Tc) on cooling the polymer melt using differential scanning calorimetry (DSC). Tc is defined as the temperature at the peak of the crystallization exotherm. Alternatively, the crystallization half-time can be determined upon rapid cooling of the polymer melt to a predetermined temperature of interest.

Preferred nucleating agents for use with the polymeric material of the skin layer include, for example, nucleating colorants or pigments. The nucleating colorants or pigments may be inorganic or organic colorants or pigments, but in general organic pigments are preferred. Suitable organic colorants and pigments include polycyclic, azo (mono- and di-) and metal complex pigments, for example, anthraquinone, dioxazine, diketo pyrrolo pyrrole, isoindoline, isoindolinone, perinone, perylene, quinacridone, quinophthalone, thioindigo, bona lake, mono azo salt, benzimidazolone, diarylide, diazo and copper-phthalocyanine colorants and pigments.

In the use of the first aspect of the invention blue colorants and pigments, for example, copper-phthalocyanine colorants and pigments such as Heliogen Blue K6911D (BASF) can give very good results. Suitable inorganic colorants and pigments include titanium dioxide and especially Co/Al/Cr oxides such as Sicopal Blue K6310 (BASF). The invention is, however, particularly applicable to plastics pipe wherein blue colourants are absent, and especially where yellow or brown colorants are present.

Other suitable nucleating agents include organic compounds, for example, carboxylate salts, for example, sodium benzoate; triphenodithiazine; sorbitol and sorbitol acetals; N',N'-dicyclohexylnaphthalene-2,6-dicarboxamide; phosphate ester salts; and pyromellitic dianhydride; and inorganic compounds, for example, salts such as NaCl; minerals such as talc and mica; and metal oxides such as silica and alumina.

Mixtures of more than one of the pigments may be used.

As heterogeneous additives, the particle size and dispersion of nucleating agents in the polymer material of the skin layer are important. In general, provided they are properly dispersed, finer particles give better results, and particle sizes in the range of around 0.01 to 10µm have been found to be effective.

For example, where a colorant or pigment is used as the nucleating agent, the particle size is preferably in the range of from 0.05µm to 3.0µm, more preferably from 0.2µm to 1.2µm.

A particularly preferred nucleating agent for use in the present invention is sodium benzoate. Sodium benzoate is a highly reactive nucleating agent capable of reacting with other formulation components, including calcium stearate. This co-additive is widely used as an acid scavenger and lubricant in polyolefins. The problem can be overcome by substituting a hydrotalcite-based acid scavenger. In general, the use of processing aids, including metal stearates, such as calcium stearate, has been found to be ineffective in reducing adhesion and should be avoided.

Preferably the skin layer also comprises an adhesion-reducing additive as described and claimed in WO2004/016420.

The adhesion-reducing additive is desirably one that has little or no effect on the mechanical and physical properties of the polymeric material of the skin layer. Preferred adhesion-reducing additives include esters, and, for example, one class of preferred esters includes esters of polyhydric alcohols such as ethane-1,2-diol, 2,2-dimethyl-1,3-propanediol (neopentyl glycol), 2-methyl-2-propyl-1,3-propanediol, 2-butyl-2-ethyl-1,3-propanediol, 2-butyl-2-methyl-1,3-propanediol, 1,3-propanediol, 2-methyl-1,3-propanediol, 1,2-pentanediol, 1,6-hexanediol, 3-hexyne-2,5-diol, 2,5-dimethyl-3-hexyne-2,5-diol, 1,10-decanediol, 2,2-bis(4-hydroxycyclohexyl)propane, 1,4-bis(hydroxymethyl)cyclohexane, 2,2,4-trimethyl-1,3-pentanediol, glycerol (propane-1,2,3-triol), trimethylolethane, trimethylolpropane, ditrimethylolpropane, pentaerythritol, dipentaerythritol, tripentaerythritol, sorbitol and mannitol.

Another class of preferred esters includes esters of fatty acids such as decanoic acid, docosanoic acid, dodecanoic acid (lauric acid), hexadecanoic acid (palmitic acid), octadecanoic acid, octanoic acid (caprylic acid), oleic acid, linoleic acid, linolenic acid, octadecanoic acid (stearic acid), behenic acid, erucic acid, myristic acid, nonanoic acid, and ricinoleic acid.

Examples of preferred esters of polyhydric alcohols include glycerol esters with erucic acid, stearic acid, lauric acid, linoleic acid, myristic acid, oleic acid, palmitic acid, ricinoleic acid and behenic acid. Particularly good results have been achieved with glycerol mono - stearate, which is one of the most preferred adhesion-reducing additives for use in the present invention.

Examples of preferred esters of fatty acids include hexadecanoic acid, 2, 3,-bis [(trimethylsilyl)oxy] propyl ester and octadecanoic acid, 2, 3,-bis [(trimethylsilyl)oxy] propyl ester.

Another class of preferred esters includes cyclic esters of hydroxycarboxylic acids, for example, γ-butyrolactone, which is the cyclic ester of 4-hydroxybutyric acid.

Yet another class of preferred adhesion reducing additives includes acid anhydrides, for example, propanoic acid 2-methyl anhydride.

A still further class of adhesion-reducing additives that can be used includes fatty acid amides, for example oleamide, stearamide, erucamide, behenamide and ethylene - bis - stearamide. Excellent results have been obtained using stearamide, erucamide and ethylene - bis - stearamide, and these are further examples of most preferred adhesion-reducing additives for use in the present invention.

Yet another class of adhesion-reducing additives that can be used includes ethoxylated amines and esters.

The quantity of adhesion-reducing additive in the skin layer depends on the additive used, but in general is within the range of from 0.0001% to 15% by weight, more preferably from 0.5% to 10% by weight and most preferably from 1.0% to 8% by weight.

Mixtures of any of the abovementioned adhesion-reducing additives may be used where compatible in any suitable combinations, proportions and amounts.

A particularly preferred plastics pipe according to the present invention comprises an inner core of polyethylene and a skin layer of a propylene block co-polymer comprising from 1 to 3% of a nucleating agent and from 2% to 4% of a glycerol ester or fatty acid amide as an adhesion-reducing additive, based on the total weight of the skin layer.

Preferably the impact strength of a 90 mm outside diameter plastics pipe having a polyethylene inner core and a polypropylene skin layer with an SDR of 17.0 is greater than 300 joules when measured using the method of EN1411:1996 at a temperature of -10°C using a 90mm diameter tup for impacting the pipe.

The nucleating agent (and the adhesion-modifying additive if present) is preferably added to the polymeric material of the skin layer as a masterbatch. The masterbatch preferably comprises from 1% to 50% by weight of the nucleating agent, more preferably from 2% to 30% by weight.

An advantage of the plastics pipes of the present invention is that the normal UV stabiliser and colorant package need not be included in the plastics material of the inner core, provided that sufficient quantities of these materials are included in the skin layer. This enables the inner core to comprise a natural polymeric material, free or substantially free from additives which add to the cost of the core material and which, in certain circumstances, may impair the mechanical or physical properties of the core material. Alternatively, stabilisers can be included in the core material, but the outer protective skin layer can be coloured to indicate the underlying grade of pipe and/or the fluid being transported by the pipe.

Suitable stabiliser or ultra-violet blocking additives for the outer protective skin include, for example, titanium dioxide, carbon black, and other fillers. Whilst carbon black is an excellent UV stabiliser and reinforcing filler, buried pipes are frequently colour coded and its use in the outer protective layer is therefore not possible for many applications. Titanium dioxide is, therefore, the preferred filler and UV stabiliser since this is also compatible with many colorant packages. Other filler materials, such as chalk and talc, may also be used. The preferred filler particle size is dependent on the filler being used, but for titanium dioxide, for example, the average particle size range is preferable from 0.003 to 0.025µm.

The skin layer and the inner core can, of course, each comprise more than one layer of polymeric material, although in practice this is not usually necessary.

The relative thickness of the skin layer and the dimensions of the pipe have also been found to affect the impact resistance of the pipe. This is discussed in GB 2297138. Preferably the skin layer has a thickness of greater than 0.1 mm, more preferably greater than 0.2 mm, and most preferably within the range of from about 0.3 mm to 2.0 mm.

The dimensions of the pipe and the protective layer are preferably such that the ratio of the external diameter of the pipe to the thickness of the skin layer is at least 70, more preferably at least 100, most preferably in the range 100 to 800. From this it can be seen that it is possible to use a thicker skin layer on a pipe of greater diameter.

When stripping the skin layer from the pipe, it is important that no residue or holidays should be left on the pipe surface that could interfere with the electrofusion jointing process. Thus conventional adhesives and skin layers that are prone to tearing or fragmentation should be avoided. In general the force required to rupture the skin layer should be greater than the force required to peel the skin layer from the inner core.

By "a clean surface" in this specification is meant a pipe surface that can be subjected to electrofusion jointing without further preparation or treatment. Such surfaces should give rise to a quality of electrofusion joint that meets the requirements of one or more of pr EN12201 part 3, pr EN1555 part 3, WIS 04-32-14 and NGT standard PL2 Part 4.

The composite plastics pipe of the present invention is preferably produced by co-extrusion, wherein the polymeric materials are brought together in the pressure area of the die and exit as a single extrudate. For example, the die may be connected to one, two, or more extruders and fed with separate streams of molten material. Alternatively, the die may be provided with concentric die outlets fed with separate streams of molten polymeric materials which are to form the inner core and the skin layer. In this case, the extrudates, on leaving the extruder die outlets, can be brought into contact with each other whilst still molten, preferably in a sizing die which simultaneously adjusts the outer diameter of the pipe.

In a further alternative, the inner core extrudate may be passed through a sizing die before applying the skin layer. In this case it may be necessary to re-heat or flame-brush the surface of the inner core extrudate to create a surface ready to receive the skin layer. Because of the difficulty of maintaining a consistent adhesion between the inner core and the skin layer, and of keeping the core surface clean (prior to coating with the skin), this method is not presently preferred.

The method of the invention is illustrated by the following non-limitative Example:

### EXAMPLE 1

A polypropylene block copolymer material was compounded with (a) a polyethylene masterbatch and (b) a polypropylene masterbatch, each containing a yellow pigment, and 3% by weight of glycerol mono-stearate (GMS) as an adhesion reducing additive. A polyethylene core pipe of nominal outer diameter 90mm was co-extruded with the yellow pigmented polypropylene, to form a composite pipe having a polyethylene core and a polypropylene copolymer skin layer. The experiment was repeated using a polypropylene block copolymer skin layer comprising a polypropylene masterbatch containing a yellow pigment, 3% by weight of GMS and 2% or more by weight of Polybatch NA 10942 masterbatch (from A. Schulman) containing sodium benzoate (SB) as a nucleating agent.

The entire series of experiments was also repeated using masterbatches containing a blue pigment in place of the yellow pigment.

Skin adhesion was measured using a rolling drum peel test as described in Appendix 1.

The skin layers of all of the resultant pipes could be peeled from the pipe using a simple hand tool, exposing a clean surface of the core pipe. Electrofusion jointing tests gave very good results in conformance with prEN12201 part 3, prEN1555 part 3 and WIS 04-32-14. In a comparison test, a pipe was extruded with a propylene block copolymer skin layer without the nucleating agent and GMS. The skin layer firmly adhered to the core pipe and could not be removed from the pipe by peeling.

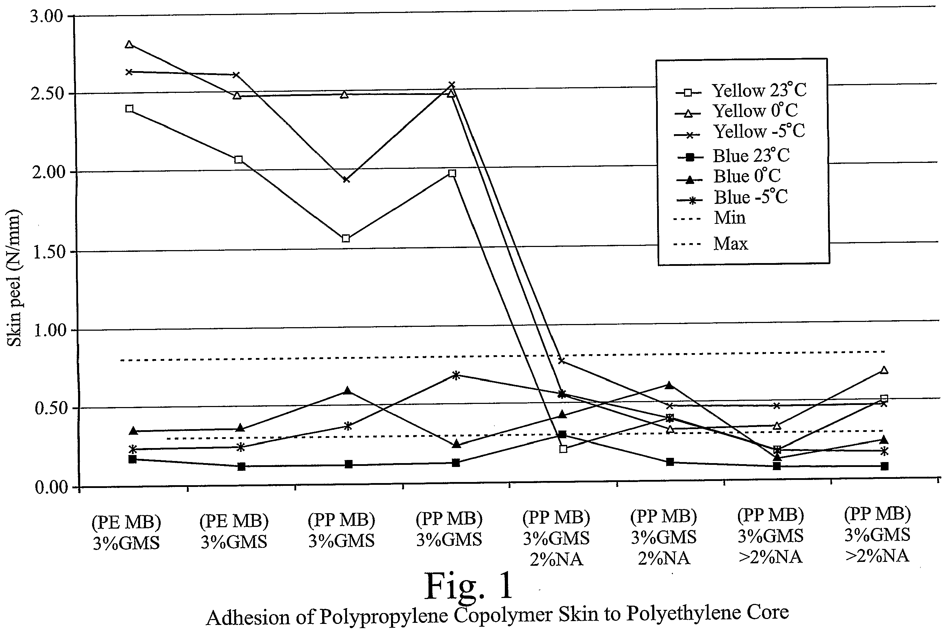

The results of the skin peeling tests in N/mm are shown in Figure 1. It can be seen that the yellow pigmented polypropylene skin pipes containing nucleating agent and GMS all fell within the preferred 0.3 to 0.8 N/mm range of peel strength, with the exception of one measurement at 23°C which was slightly below. Without the nucleating agent the yellow polypropylene skin pipes had peel values in excess of 1.5 N/mm and as high as 2.5 N/mm. The blue pigmented polypropylene skin pipes all fell below the preferred range, with one borderline exception measured at 23°C.

The impact strength of the pipes was measured at - 10°C, with and without the skin layer, using the method of EN 1411:1996. In further experiments the pipes were notched at 90° to the point of impact prior to testing to simulate service conditions. The results are given in Table 1.

The impact test results show that by using a nucleating agent to control the bond strength of a propylene block copolymer skin layer to a polyethylene core, the peelability of the pipe is retained together with the impact strength.

### APPENDIX 1

### DETERMINATION OF THE ADHESION STRENGTH OF PIPE SKIN - CORE PEEL

### Apparatus

A tensile testing machine accurate to grade A of BS5214: Part 1: 1975 or grade 1 of BS1610: Part 1: 1985, for example, a Lloyds tensile test machine, using a 100N load cell.

### Test Specimens

Two test pieces are cut one from each end of the sample pipe, 25mm +/- 2mm wide, the two sample rings of pipe are trimmed around the circumference to remove the jagged edge. The pipe is marked along top dead centre (TDC) of the extrusion line (if known).

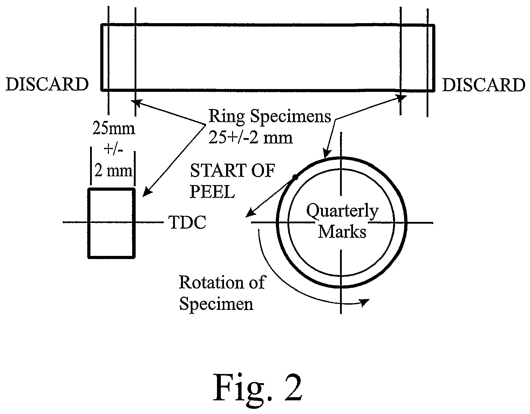

The two ring specimens are marked with an indelible marker at quarterly points around the circumference beginning at TDC (if known) as shown in Figure 2.

### Procedure

Cut through the skin along mark at TDC & prise edge of skin from pipe, peel skin off to 30 - 40mm length, feed peeled skin through the jig as shown & clamp in upper jaws.

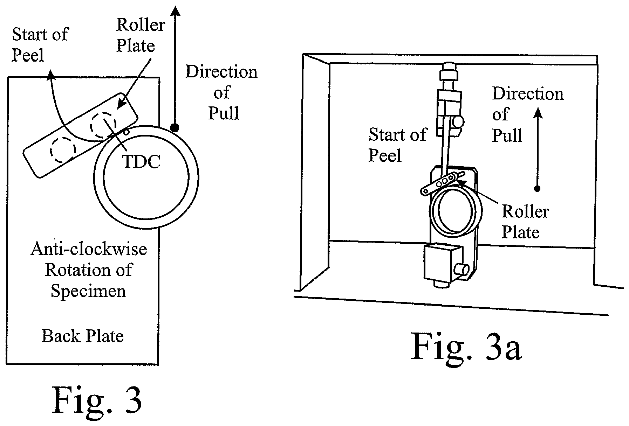

Mount the test piece in the jig as shown in Figure 3.

The skin is then peeled from the pipe at a separation rate of 100mm/min and a trace recorded of load versus time.

The average value of the load required to peel the skin sample is calculated (Newtons), and divided by the true width of the peel sample to obtain the test result (Newtons/millimetre).

The average of the 10 peak load values recorded is calculated (Newtons), and divided by the true width of the peel sample to obtain the test result (Newtons/millimetre).

All of the features disclosed in this specification, and/or all of the steps of any method or process so disclosed, may be combined in any combination, except combinations where at least some of such features and/or steps are mutually exclusive.

**Table 1**

| | | | | | | | | |
|---|---|---|---|---|---|---|---|---|
| Pipe | 90mm SDR17 | | | | | | | |
| Core Resin | PE100 Polyethylene | | | | | | | |
| Skin | Propylene block copolymer | | | | | | | |
| Colour | Yellow | Yellow | Yellow | | | Blue | Blue | Blue |
| Masterbatch | PP | PP | PP | | | PP | PP | PP |
| Nucleating Agent | | 2%SB | >2%SB | | | | 2%SB | >2%SB |
| Additive | 3%GMS | 3%GMS | 3%GMS | | | 3%GMS | 3%GMS | 3%GMS |
| Thickness(mm) | 0.755 | 0.760 | 0.795 | | | 0.74 | 0.73 | 0.77 |
| Impact at -10°C | | | | | | | | |
| Skin notched to 0.2mm depth (J) | 587 | 587 | > 588 | | | 470 | 587 | 587 |

## Claims

1. Use, in a plastics pipe which comprises an inner core and an outer removable skin layer bonded thereto, wherein the outer removable skin layer comprises a polymeric material chosen for its physical and mechanical properties,
of a nucleating agent for the polymeric material, the nucleating agent being present in the skin layer in an amount such that the adhesion of the skin layer to the inner core is sufficient to prevent substantial undesired relative movement between the skin layer and the core during installation, but insufficient to prevent the outer skin layer from being cleanly removed by peeling, at least at the ends of the pipe, and insufficient to cause a substantial reduction in the impact strength of the inner core.

2. Use according to claim 1, wherein the strength of the adhesive bond between the skin layer and the inner core is from 0.2 N/mm to 2.0 N/mm, when measured by a rolling drum peel test as described in Appendix 1.

3. Use according to claim 1 or 2, wherein the strength of the adhesive bond between the skin layer and the inner core is from 0.3 N/mm to. 1.5 N/mm, when measured by a rolling drum peel test as described in Appendix 1.

4. Use according to any one of the preceding claims, in which the strength of the adhesive bond between the skin layer and the inner core is such that the impact strength of the composite pipe is at least 40%, preferably 60%, of the impact strength of the inner core without the skin layer.

5. Use according to any one of the preceding claims, in which the inner core comprises polyethylene.

6. Use according to any one of the preceding claims, wherein the skin layer comprises a propylene homo-or co-polymer, a propylene block co-polymer, or a propylene random copolymer.

7. Use according to claim 6, wherein the skin layer comprises a propylene block co-polymer.

8. Use according to any one of the preceding claims, in which the inner core comprises polyethylene and the skin layer comprises a propylene co-polymer and wherein the impact strength of a 90 mm outside diameter pipe having an SDR of 17.0 is greater than 300 joules, when measured using the method of EN1411:1996 at a temperature of -10°C using a 90mm tup for impacting the pipe.

9. Use according to any one of the preceding claims, wherein the quantity of nucleating agent in the skin layer is from 0.5% to 10% by weight.

10. Use according to any one of the preceding claims, wherein the nucleating agent is a nucleating colorant or pigment.

11. Use according to claim 10, wherein the nucleating agent is an organic colorant or pigment.

12. Use according to claim 11, wherein the organic colorants or pigment is selected from polycyclic, azo (mono- and di-) and metal complex pigments, anthraquinone, dioxazine, diketo pyrrolo pyrrole, isoindoline, isoindolinone, perinone, perylene, quinacridone, quinophthalone, thioindigo, bona lake, mono azo salt, benzimidazolone, diarylide, diazo and copper-phthalocyanine colorants and pigments.

13. Use according to claim 12, wherein the colorant or pigment is a copper-phthalocyanine colorant or pigment.

14. Use according to any one of claims 1 to 9, wherein the nucleating agent comprises an organic compound selected from the group consisting of carboxylate salts, triphenodithiazine; sorbitol and sorbitol acetals; N',N'-dicyclohexylnaphthalene-2,6-dicarboxamide; phosphate ester salts; and pyromellitic dianhydride.

15. Use according to any one of claims 1 to 9, wherein the nucleating agent comprises an inorganic compound selected from the group consisting of inorganic salts, including sodium chloride; minerals, including talc and mica; and metal oxides, including silica and alumina.

16. Use according to claim 14, wherein the nucleating agent comprises sodium benzoate.

17. Use according to any one of claims 10 to 14, wherein the particle size of the nucleating agent is from 0.01µm to 10.0µm.

18. Use according to any one of the preceding claims, wherein the skin layer comprises an adherent polymeric material, a nucleating agent and an appropriate amount of an adhesion-reducing additive.

19. Use according to claim 18, wherein the adhesion-reducing additive in the skin layer is present in an amount of from 0.5% to 10% by weight.

20. Use according to claim 18 or 19, wherein the adhesion reducing additive is an ester of a polyhydric alcohol.

21. Use according to claim 20, wherein the polyhydric alcohol is glycerol.

22. Use according to claim 20 or 21, wherein the ester is a fatty acid ester.

23. Use according to any one of claims 20 to 22, wherein the adhesion-reducing additive is glycerol mono-stearate.

24. Use according to any one of the preceding claims, which comprises an inner core of polyethylene and a skin layer of a propylene block copolymer comprising from 1% to 3% of a nucleating agent and from 2% to 4% of a glycerol ester.

25. Use according to claim 18 or 19, wherein the adhesion-reducing additive is a fatty acid amide.

26. Use according to claim 25, wherein the fatty acid amide is stearamide or erucamide.

27. Use according to claim 25, wherein the fatty acid amide is ethylene-bis-stearamide.

28. Use according to any one of the preceding claims, wherein the skin layer has a thickness within the range of from 0.2 mm to 2.0 mm.

29. Use according to any one of the preceding claims, wherein the ratio of the external diameter of the pipe to the thickness of the skin layer is from 100 to 800.

30. Use according to any one of the preceding claims, wherein the strength (in N per mm of width) of the skin layer exceeds the peel strength (in N per mm width) of the adhesive bond between the outer removable skin layer and the inner core.

31. A plastics pipe which comprises an inner core and an outer removable skin layer bonded thereto,
the outer removable skin layer comprising a polymeric material, chosen for its physical and mechanical properties,
wherein the skin layer also comprises a nucleating agent for the polymeric material,
the nucleating agent being present in the skin layer in an amount such that the adhesion of the skin layer to the inner core is sufficient to prevent substantial undesired relative movement between the skin layer and the core during installation, but insufficient to prevent the outer skin layer from being cleanly removed by peeling, at least at the ends of the pipe, and insufficient to cause a substantial reduction in the impact strength of the inner core,
wherein the nucleating agent is an organic compound,
with the proviso that the skin layer is substantially free from blue colorants.

32. A plastics pipe according to claim 31, wherein the strength of the adhesive bond between the skin layer and the inner core is from 0.2 N/mm to 2.0 N/mm, when measured by a rolling drum peel test as described in Appendix 1.

33. A plastics pipe according to claim 31 or 32, wherein the strength of the adhesive bond between the skin layer and the inner core is from 0.3 N/mm to 1.5 N/mm, when measured by a rolling drum peel test as described in Appendix 1.

34. A plastics pipe according to any one of claims 31 to 33, in which the strength of the adhesive bond between the skin layer and the inner core is such that the impact strength of the composite pipe is at least 50%, preferably 75%, of the impact strength of the inner core without the skin layer.

35. A plastics pipe according to any one of claims 31 to 34, in which the inner core comprises polyethylene.

36. A plastics pipe according to any one of claims 31 to 35, wherein the skin layer comprises a propylene homo-or co-polymer, a propylene block co-polymer, or a propylene random copolymer.

37. A plastics pipe according to claim 36, wherein the skin layer comprises a propylene block co-polymer.

38. A plastics pipe according to any one of claim 31 to 37, in which the inner core comprises polyethylene and the skin layer comprises a propylene co-polymer and wherein the impact strength of a 90mm outside diameter pipe having an SDR of 17.0 is greater than 300 joules, when measured using the method of EN1411:1996 at a temperature of -10°C using a 90mm tup for impacting the pipe.

39. A plastics pipe according to any one of claims 31 to 38, wherein the quantity of nucleating agent in the skin layer is from 0.01% to 8% by weight.

40. A plastics pipe according to any one of claims 31 to 39, wherein the nucleating agent is a nucleating colorant or pigment other than a blue colorant or pigment.

41. A plastics pipe according to claim 40, wherein the nucleating agent is an organic colorant or pigment.

42. A plastics pipe according to claim 41, wherein the organic colorants or pigment is selected from polycyclic, azo (mono- and di-) and metal complex pigments, anthraquinone, dioxazine, diketo pyrrolo pyrrole, isoindoline, isoindolinone, perinone, perylene, quinacridone, quinophthalone, thioindigo, bona lake, mono azo salt, benzimidazolone, diarylide and diazo colorants and pigments.

43. A plastics pipe according to any one of claims 31 to 39, wherein the nucleating agent comprises an organic compound selected from the group consisting of carboxylate salts, triphenodithiazine; sorbitol and sorbitol acetals; N',N'-dicyclohexylnaphthalene-2,6-dicarboxamide; phosphate ester salts; and pyromellitic dianhydride.

44. A plastics pipe according to claim 43, wherein the nucleating agent comprises sodium benzoate.

45. A plastics pipe according to any one of claims 31 to 44, wherein the particle size of the nucleating agent is from 0.01µm to 10.0µm.

46. A plastics pipe according to any one of claims 31 to 45, wherein the skin layer comprises an adherent polymeric material, a nucleating agent and an appropriate amount of an adhesion-reducing additive.

47. A plastics pipe according to claim 46, wherein the adhesion-reducing additive in the skin layer is present in an amount of from 0.5% to 10% by weight.

48. A plastics pipe according to claim 46 or 47, wherein the adhesion reducing additive is an ester of a polyhydric alcohol.

49. A plastics pipe according to claim 48, wherein the polyhydric alcohol is glycerol.

50. A plastics pipe according to claim 48 or 49, wherein the ester is a fatty acid ester.

51. A plastics pipe according to any of one claims 48 to 50 , wherein the adhesion-reducing additive is glycerol mono-stearate.

52. A plastics pipe according to any one of claims 31 to 51, which comprises an inner core of polyethylene and a skin layer of a propylene block copolymer comprising a nucleating agent and from 2% to 4% of a glycerol ester.

53. A plastics pipe according to any one of claims 31 to 47, wherein the adhesion-reducing additive is a fatty acid amide.

54. A plastics pipe according to claim 53, wherein the 54. A plastics pipe according to claim 53, wherein the fatty acid amide is stearamide or erucamide.

55. A plastics pipe according to claim 53, wherein the fatty acid amide is ethylene-bis-stearamide.

56. A plastics pipe according to any one of claims 31 to 55, wherein the skin layer has a thickness within the range of from 0.2 mm to 2.0 mm.

57. A plastics pipe according to any one of claims 31 to 56, wherein the ratio of the external diameter of the pipe to the thickness of the skin layer is from 100 to 800.

58. A plastics pipe according to any one of claims 31 to 57, wherein the strength (in N per mm of width) of the skin layer exceeds the peel strength (in N per mm width) of the adhesive bond between the outer removable skin layer and the inner core.

59. A method for the production of a plastics pipe comprising an inner core and an outer removable skin layer bonded thereto, the outer removable skin layer comprising a polymeric material chosen for its physical and mechanical properties, and an effective amount of a nucleating agent which is an organic compound, which method comprises co-extruding molten polymeric materials forming the inner core and the outer removable skin layer from one or more extruder dies, bringing the molten polymeric materials together and allowing them to cool, such that, on cooling, the adhesion of the skin layer to the inner core is sufficient to prevent substantial undesired relative movement between the skin layer and the core during installation of the pipe, but insufficient to prevent the skin layer from being cleanly removed by peeling, at least at the ends of the pipe, and insufficient to cause a substantial reduction in the impact strength of the inner core, the skin layer being substantially free from blue colorants.

60. A method according to claim 59, wherein the polymeric materials of the inner core and the outer removable skin layer are extruded simultaneously and brought together whilst still molten.

61. A method of making a joint to a plastics pipe according to any one of claims 31 to 58, or of joining two such plastics pipes, which comprises peeling the skin layer from the region or regions of the pipe to be joined, to expose a clean surface suitable for electrofusion jointing, installing an electrofusion fitting over the clean surface or surfaces of the pipe or pipes and activating the electrofusion fitting to fuse the region or regions of the pipe or pipes thereto.

## Patentansprüche

1. Verwendung, in einem Kunststoffrohr, das einen inneren Kern und eine äußere abnehmbare Hautschicht, die darin gebunden ist, umfasst, wobei die äußere abnehmbare Hautschicht ein Polymermaterial umfasst, das nach seinen physikalischen und mechanischen Eigenschaften ausgewählt ist,
eines Nukleierungsmittels für das Polymermaterial, wobei das Nukleierungsmittel in der Hautschicht in einer solchen Menge vorhanden ist, dass die Adhäsion der Hautschicht an den inneren Kern ausreichend ist, um eine bedeutende, unerwünschte relative Bewegung zwischen der Hautschicht und dem Kern während der Installation zu verhindern, aber nicht ausreichend ist, um zu verhindern, dass die äußere Hautschicht mindestens an den Enden des Rohr sauber durch Schälen entfernt wird, und nicht ausreichend ist, um eine bedeutende Reduzierung in der Schlagfestigkeit des inneren Kerns zu verursachen.

2. Verwendung nach Anspruch 1, wobei die Festigkeit der adhäsiven Bindung zwischen der Hautschicht und dem inneren Kern von 0,2 N/mm bis 2,0 N/mm ist, gemessen durch einen Trommelschälversuch wie beschrieben in Anhang 1.

3. Verwendung nach Anspruch 1 oder 2, wobei die Festigkeit der adhäsiven Bindung zwischen der Hautschicht und dem inneren Kern von 0,3 N/mm bis 1,5 N/mm ist, gemessen durch einen Trommelschälversuch wie beschrieben in Anhang 1.

4. Verwendung nach einem der vorherigen Ansprüche, bei dem die Festigkeit der adhäsiven Bindung zwischen der Hautschicht und dem inneren Kern derart ist, dass die Schlagfestigkeit des Verbundrohrs mindestens 40 %, vorzugsweise 60 %, der Schlagfestigkeit des inneren Kerns ohne die Hautschicht ist.

5. Verwendung nach einem der vorherigen Ansprüche, bei dem der innere Kern Polyethylen umfasst.

6. Verwendung nach einem der vorherigen Ansprüche, wobei die Hautschicht ein Propylenhomo- oder -copolymer, ein Propylen-Blockcopolymer oder ein beliebiges Propylencopolymer umfasst.

7. Verwendung nach Anspruch 6, wobei die Hautschicht a Propylen-Blockcopolymer umfasst.

8. Verwendung nach einem der vorherigen Ansprüche, bei dem der innere Kern Polyethylen umfasst und die Hautschicht ein Propylencopolymer umfasst, und wobei die Schlagfestigkeit eines Rohrs mit Außendurchmesser 90 mm und einem SDR von 17,0 größer als 300 Joules ist, gemessen unter Verwendung des Verfahrens von EN1411:1996 bei einer Temperatur von -10 °C unter Verwendung eines Schlagkopfs von 90 mm zum Schlagen auf das Rohr.

9. Verwendung nach einem der vorherigen Ansprüche, wobei die Menge des Nukleierungsmittels in der Hautschicht von 0,5 Gew.-% bis 10 Gew.-% ist.

10. Verwendung nach einem der vorherigen Ansprüche, wobei das Nukleierungsmittel ein Nukleierungsfarbstoff oder Pigment ist.

11. Verwendung nach Anspruch 10, wobei das Nukleierungsmittel ein organischer Farbstoff oder ein Pigment ist.

12. Verwendung nach Anspruch 11, wobei die organischen Farbstoffe oder das Pigment ausgewählt sind aus polycyclischen, Azo- (mono- und di-) und Metallkomplex-Pigmenten, Anthrachinon, Dioxazin, Diketopyrrolopyrrol, Isoindolin, Isoindolinon, Perinon, Perylen, Chinacridon, Chinophthalon, Thioindigo, Bona-Pigment, mono-Azo-Salz, Benzimidazolon, Diarylid, Diazo- und Kupfer-Phthalocyanin-Farbstoffe und -Pigmente.

13. Verwendung nach Anspruch 12, wobei der Farbstoff oder das Pigment ein Kupfer-Phthalocyanin-Farbstoff oder -Pigment ist.

14. Verwendung nach einem der Ansprüche 1 bis 9, wobei das Nukleierungsmittel eine organische Verbindung umfasst, ausgewählt aus der Gruppe bestehend aus Carboxylat-Salzen, Triphenodithiazin; Sorbitol und Sorbitolacetale; N',N'-Dicyclohexylnaphthalen-2,6-dicarboxamid; Phosphatester-Salzen; und Pyromellitdianhydrid.

15. Verwendung nach einem der Ansprüche 1 bis 9, wobei das Nukleierungsmittel eine anorganische Verbindung umfasst, ausgewählt aus der Gruppe bestehend aus anorganischen Salzen, einschließlich Natriumchlorid; Mineralen, einschließlich Talkum und Glimmer; und Metalloxiden, einschließlich Siliziumdioxid und Aluminiumoxid.

16. Verwendung nach Anspruch 14, wobei das Nukleierungsmittel Natriumbenzoat umfasst.

17. Verwendung nach einem der Ansprüche 10 bis 14, wobei die Partikelgröße des Nukleierungsmittels von 0,01 µm bis 10,0 µm ist.

18. Verwendung nach einem der vorherigen Ansprüche, wobei die Hautschicht ein adhärentes Polymermaterial, ein Nukleierungsmittel und eine geeignete Menge eines adhäsionsreduzierenden Mittels umfasst.

19. Verwendung nach Anspruch 18, wobei das adhäsionsreduzierende Additiv in der Hautschicht in einer Menge von 0,5 Gew.-% bis 10 Gew.-% vorhanden ist.

20. Verwendung nach Anspruch 18 oder 19, wobei das adhäsionsreduzierende Additiv ein Ester eines mehrwertigen Alkohols ist.

21. Verwendung nach Anspruch 20, wobei der mehrwertige Alkohol Glycerol ist.

22. Verwendung nach Anspruch 20 oder 21, wobei der Ester ein Fettsäureester ist.

23. Verwendung nach einem der Ansprüche 20 bis 22, wobei das adhäsionsreduzierende Additiv Glycerolmonostearat ist.

24. Verwendung nach einem der vorherigen Ansprüche, die einen inneren Kern aus Polyethylen und eine Hautschicht aus einem Propylenblockcopolymer umfassend von 1 % bis 3 % eines Nukleierungsmittel und von 2 % bis 4 % eines Glycerolesters umfasst.

25. Verwendung nach Anspruch 18 oder 19, wobei das adhäsionsreduzierende Additiv ein Fettsäureamid ist.

26. Verwendung nach Anspruch 25, wobei das Fettsäureamid Stearamid oder Erucamid ist.

27. Verwendung nach Anspruch 25, wobei das Fettsäureamid Ethylen-bis-stearamid ist.

28. Verwendung nach einem der vorherigen Ansprüche, wobei die Hautschicht eine Stärke im Bereich von 0,2 mm bis 2,0 mm hat.

29. Verwendung nach einem der vorherigen Ansprüche, wobei das Verhältnis des Außendurchmessers des Rohrs zur Stärke der Hautschicht von 100 bis 800 ist.

30. Verwendung nach einem der vorherigen Ansprüche, wobei die Festigkeit (in N pro mm Breite) der Hautschicht größer als die Schälfestigkeit (in N pro mm Breite) der adhäsiven Bindung zwischen der äußeren abnehmbaren Hautschicht und dem inneren Kern ist.

31. Kunststoffrohr, das einen inneren Kern und eine äußere abnehmbare Hautschicht, die darin gebunden ist, umfasst,
wobei die äußere abnehmbare Hautschicht ein Polymermaterial umfasst, das nach seinen physikalischen und mechanischen Eigenschaften ausgewählt ist,
wobei die Hautschicht auch ein Nukleierungsmittel für das Polymermaterial umfasst,
das Nukleierungsmittel in der Hautschicht in einer solchen Menge vorhanden ist, dass die Adhäsion der Hautschicht an den inneren Kern ausreichend ist, um eine bedeutende, unerwünschte relative Bewegung zwischen der Hautschicht und dem Kern während der Installation zu verhindern, aber nicht ausreichend ist, um zu verhindern, dass die äußere Hautschicht mindestens an den Enden des Rohr sauber durch Ablösen entfernt wird, und nicht ausreichend ist, um eine bedeutende Reduzierung in der Schlagfestigkeit des inneren Kerns zu verursachen,
wobei das Nukleierungsmittel eine organische Verbindung ist,
unter der Bedingung, dass die Hautschicht im Wesentlichen frei von blauen Farbstoffen ist.

32. Kunststoffrohr nach Anspruch 31, wobei die Festigkeit der adhäsiven Bindung zwischen der Hautschicht und dem inneren Kern von 0,2 N/mm bis 2,0 N/mm ist, gemessen durch einen Trommelsehälversuch wie beschrieben in Anhang 1.

33. Kunststoffrohr nach Anspruch 31 oder 32, wobei die Festigkeit der adhäsiven Bindung zwischen der Hautschicht und dem inneren Kern von 0,3 N/mm bis 1,5 N/mm ist, gemessen durch einen Trommelschälversuch wie beschrieben in Anhang 1.

34. Kunststoffrohr nach einem der Ansprüche 31 bis 33, bei dem die Festigkeit der adhäsiven Bindung zwischen der Hautschicht und dem inneren Kern derart ist, dass die Schlagfestigkeit des Verbundrohrs mindestens 50 %, vorzugsweise 75 %, der Schlagfestigkeit des inneren Kerns ohne die Hautschicht ist.

35. Kunststoffrohr nach einem der Ansprüche 31 bis 34, bei dem der innere Kern Polyethylen umfasst.

36. Kunststoffrohr nach einem der Ansprüche 31 bis 35, wobei die Hautschicht ein Propylenhomo- oder -copolymer, ein Propylen-Blockcopolymer oder ein beliebiges Propylencopolymer umfasst.

37. Kunststoffrohr nach Anspruch 36, wobei die Hautschicht a Propylen-Blockcopolymer umfasst.

38. Kunststoffrohr nach einem der Ansprüche 31 bis 37, bei dem der innere Kern Polyethylen umfasst und die Hautschicht ein Propylencopolymer umfasst, und wobei die Schlagfestigkeit eines Rohrs mit Außendurchmesser 90 mm und einem SDR von 17,0 größer als 300 Joules ist, gemessen unter Verwendung des Verfahrens von EN1411:1996 bei einer Temperatur von -10 °C unter Verwendung eines Schlagkopfs von 90 mm zum Schlagen auf das Rohr.

39. Kunststoffrohr nach einem der Ansprüche 31 bis 38, wobei die Menge des Nukleierungsmittels in der Hautschicht von 0,01 Gew.-% bis 8 Gew.-% ist.

40. Kunststoffrohr nach einem der Ansprüche 31 bis 39, wobei das Nukleierungsmittel ein anderer Nukleierungsfarbstoff oder -Pigment als ein blauer Farbstoff oder Pigment ist.

41. Kunststoffrohr nach Anspruch 40, wobei das Nukleierungsmittel ein organischer Farbstoff oder ein Pigment ist.

42. Kunststoffrohr nach Anspruch 41, wobei die organischen Farbstoffe oder das Pigment ausgewählt sind aus polycyclischen, Azo- (mono- und di-) und Metallkomplex-Pigmenten, Anthrachinon, Dioxazin, Diketopyrrolopyrrol, Isoindolin, Isoindolinon, Perinon, Perylen, Chinacridon, Chinophthalon, Thioindigo, Bona-Pigment, mono-Azo-Salz, Benzimidazolon, Diarylid- und Diazo--Farbstoffen und -Pigmenten.

43. Kunststoffrohr nach einem der Ansprüche 31 bis 39, wobei das Nukleierungsmittel eine organische Verbindung umfasst, ausgewählt aus der Gruppe bestehend aus Carboxylat-Salzen, Triphenodithiazin; Sorbitol und Sorbitolacetale; N',N'-Dicyclohexylnaphthalen-2,6-dicarboxamid; Phosphatester-Salzen; und Pyromellitdianhydrid.

44. Kunststoffrohr nach Anspruch 43, wobei das Nukleierungsmittel Natriumbenzoat umfasst.

45. Kunststoffrohr nach einem der Ansprüche 31 bis 44, wobei die Partikelgröße des Nukleierungsmittels von 0,01 µm bis 10,0 µm ist.

46. Kunststoffrohr nach einem der Ansprüche 31 bis 45, wobei die Hautschicht ein adhärentes Polymermaterial, ein Nukleierungsmittel und eine geeignete Menge eines adhäsionsreduzierenden Additivs umfasst.

47. Kunststoffrohr nach Anspruch 46, wobei das adhäsionsreduzierende Additiv in der Hautschicht in einer Menge von 0,5 Gew.-% bis 10 Gew.-% vorhanden ist.

48. Kunststoffrohr nach Anspruch 46 oder 47, wobei das adhäsionsreduzierende Additiv ein Ester eines mehrwertigen Alkohols ist.

49. Kunststoffrohr nach Anspruch 48, wobei der mehrwertige Alkohol Glycerol ist.

50. Kunststoffrohr nach Anspruch 48 oder 49, wobei der Ester ein Fettsäureester ist.

51. Kunststoffrohr nach einem der Ansprüche 48 bis 50, wobei das adhäsionsreduzierende Additiv Glycerolmonostearat ist.

52. Kunststoffrohr nach einem der Ansprüche 31 bis 51, das einen inneren Kern aus Polyethylen und eine Hautschicht aus einem Propylenblockcopolymer umfassend ein Nukleierungsmittel und von 2 % bis 4 % eines Glycerolesters umfasst.

53. Kunststoffrohr nach einem der Ansprüche 31 bis 47, wobei das adhäsionsreduzierende Additiv ein Fettsäureamid ist.

54. Kunststoffrohr nach Anspruch 53, wobei das Fettsäureamid Stearamid oder Erucamid ist.

55. Kunststoffrohr nach Anspruch 53, wobei das Fettsäureamid Ethylen-bis-stearamid ist.

56. Kunststoffrohr nach einem der Ansprüche 31 bis 55, wobei die Hautschicht eine Stärke im Bereich von 0,2 mm bis 2,0 mm hat.

57. Kunststoffrohr nach einem der Ansprüche 31 bis 56, wobei das Verhältnis des Außendurchmessers des Rohrs zur Stärke der Hautschicht von 100 bis 800 ist.

58. Kunststoffrohr nach einem der Ansprüche 31 bis 57, wobei die Festigkeit (in N pro mm Breite) der Hautschicht größer als die Schälfestigkeit (in N pro mm Breite) der adhäsiven Bindung zwischen der äußeren abnehmbaren Hautschicht und dem inneren Kern ist.

59. Verfahren zur Herstellung eines Kunststoffrohrs, umfassend einen inneren Kern und eine äußere abnehmbare Hautschicht, die daran gebunden ist, die äußere abnehmbare Hautschicht umfassend ein Polymermaterial, das nach seinen physikalischen und mechanischen Eigenschaften ausgewählt ist, und eine wirksame Menge eines Nukleierungsmittels, das eine organische Verbindung ist, wobei das Verfahren ein Co-Extrudieren von geschmolzenen Polymermaterialien umfasst, die den inneren Kern und die äußere abnehmbare Hautschicht aus einer oder mehreren Extruder-Matrizen durch Zusammenbringen der geschmolzenen Polymermaterialien und deren Abkühlenlassen bilden, sodass die Adhäsion der Hautschicht an den inneren Kern bei Abkühlung ausreichend ist, um eine bedeutende, unerwünschte relative Bewegung zwischen der Hautschicht und dem Kern während der Installation des Rohrs zu verhindern, aber nicht ausreichend ist, um zu verhindern, dass die Hautschicht mindestens an den Enden des Rohr sauber durch Schälen entfernt wird, und nicht ausreichend ist, um eine bedeutende Reduzierung in der Schlagfestigkeit des inneren Kerns zu verursachen, wobei die Hautschicht im Wesentlichen frei von blauen Farbstoffen ist.

60. Verfahren nach Anspruch 59, wobei die Polymermaterialien des inneren Kerns und der äußeren abnehmbaren Hautschicht gleichzeitig extrudiert und noch in geschmolzenem Zustand zusammengebracht werden.

61. Verfahren zum Anfertigen einer Verbindung an einem Kunststoffrohr nach einem der Ansprüche 31 bis 58 oder zum Verbinden von zwei solcher Kunststoffrohre, das ein Schälen der Hautschicht von der Region oder den Regionen des Rohrs, die verbunden werden sollen, um eine saubere Oberfläche freizulegen, die für ein Verbinden durch Elektrofusion, Installieren eines Elektrofusionsanschlusses auf der sauberen Oberfläche des Rohrs oder der Rohre und Aktivieren des Elektrofusionsanschlusses, um die Region oder die Regionen des Rohrs oder der Rohe daran zu fusionieren, geeignet sind.

## Revendications

1. Utilisation, dans un tuyau en matière plastique qui comprend une âme intérieure et une couche superficielle amovible extérieure collée à celle-ci, la couche superficielle amovible extérieure comprenant un polymère choisi pour ses propriétés physiques et mécaniques,
d'un agent nucléant pour le polymère, l'agent nucléant étant présent dans la couche superficielle en quantité telle que l'adhésion de la couche superficielle à l'âme intérieure est suffisante pour empêcher un déplacement relatif indésirable important entre la couche superficielle et l'âme pendant l'installation, mais insuffisante pour empêcher la couche superficielle extérieure d'être enlevée proprement par décollement, au moins aux extrémités du tuyau, et insuffisante pour causer une réduction importante de la résistance au choc de l'âme intérieure.

2. Utilisation selon la revendication 1, dans laquelle la résistance de la liaison adhésive entre la couche superficielle et l'âme intérieure est de 0,2 N/mm à 2,0 N/mm, mesurée par un test de décollement au tambour roulant tel qu'il est décrit dans l'Annexe 1.

3. Utilisation selon la revendication 1 ou 2, dans laquelle la résistance de la liaison adhésive entre la couche superficielle et l'âme intérieure est de 0,3 N/mm à 1,5 N/mm, mesurée par un test de décollement au tambour roulant tel qu'il est décrit dans l'Annexe 1.

4. Utilisation selon l'une quelconque des revendications précédentes, dans laquelle la résistance de la liaison adhésive entre la couche superficielle et l'âme intérieure est telle que la résistance au choc du tuyau composite est au moins 40 %, de préférence 60 %, de la résistance au choc de l'âme intérieure sans la couche superficielle.

5. Utilisation selon l'une quelconque des revendications précédentes, dans laquelle l'âme intérieure comprend du polyéthylène.

6. Utilisation selon l'une quelconque des revendications précédentes, dans laquelle la couche superficielle comprend un homo- ou copolymère de propylène, un copolymère séquencé de propylène, ou un copolymère aléatoire de propylène.

7. Utilisation selon la revendication 6, dans laquelle la couche superficielle comprend un copolymère séquencé de propylène.

8. Utilisation selon l'une quelconque des revendications précédentes, dans laquelle l'âme intérieure comprend du polyéthylène et la couche superficielle comprend un copolymère de propylène et dans laquelle la résistance au choc d'un tuyau de 90 mm de diamètre extérieur ayant un rapport SDR de 17,0 est supérieure à 300 joules, mesurée par la méthode de EN 1411 :1996 à une température de -10°C et en utilisant un marteau de 90 mm pour frapper le tuyau.

9. Utilisation selon l'une quelconque des revendications précédentes, dans laquelle la quantité d'agent nucléant dans la couche superficielle est de 0,5 % à 10 % en poids.

10. Utilisation selon l'une quelconque des revendications précédentes, dans laquelle l'agent nucléant est un colorant ou pigment nucléant.

11. Utilisation selon la revendication 10, dans laquelle l'agent nucléant est un colorant ou pigment organique.

12. Utilisation selon la revendication 11, dans laquelle le colorant ou pigment organique est choisi parmi : pigments polycycliques, azo (ono- et di-) et de complexe métallique, anthraquinone, dioxazine, dikéto pyrrolo pyrrole, isoindoline, isoindolinone, périnone, pérylène, quinacridone, quinophtalone, thioindigo, bona lake, sel mono azo, benzimidazolone, diarylide, diazo et colorants et pigments de phtalocyanine de cuivre.

13. Utilisation selon la revendication 12, dans laquelle le colorant ou pigment est un colorant ou pigment de phtalocyanine de cuivre.

14. Utilisation selon l'une quelconque des revendications 1 à 9, dans laquelle l'agent nucléant comprend un composé organique choisi dans le groupe comprenant : sels de carboxylate, triphénodithiazine ; sorbitol et acétals de sorbitol ; N',N'-dicyclohexylnaphtalène-2,6-dicarboxamide ; sels d'ester de phosphate ; et dianhydride pyromellitique.

15. Utilisation selon l'une quelconque des revendications 1 à 9, dans laquelle l'agent nucléant comprend un composé inorganique choisi dans le groupe constitué de sels inorganiques, comprenant : chlorure de sodium ; minéraux, comprenant talc et mica ; et oxydes métalliques, comprenant silice et alumine.

16. Utilisation selon la revendication 14, dans laquelle l'agent nucléant comprend le benzoate de sodium.

17. Utilisation selon l'une quelconque des revendications 10 à 14, dans laquelle la taille des particules de l'agent nucléant est de 0,01 µm à 10,0 µm

18. Utilisation selon l'une quelconque des revendications précédentes, dans laquelle la couche superficielle comprend un polymère adhérent, un agent nucléant et une quantité appropriée d'un additif réducteur d'adhésion.

19. Utilisation selon la revendication 18, dans laquelle l'additif réducteur d'adhésion dans la couche superficielle est présent à raison de 0,5 % à 10 % en poids.

20. Utilisation selon la revendication 18 ou 19, dans laquelle l'additif réducteur d'adhésion est un ester d'un alcool polyhydrique.

21. Utilisation selon la revendication 20, dans laquelle l'alcool polyhydrique est le glycérol.

22. Utilisation selon la revendication 20 ou 21, dans laquelle l'ester est un ester d'acide gras.

23. Utilisation selon l'une quelconque des revendications 20 à 22, dans laquelle l'additif réducteur d'adhésion est le monostéarate de glycérol.

24. Utilisation selon l'une quelconque des revendications précédentes, qui comprend une âme intérieure de polyéthylène et une couche superficielle d'un copolymère séquencé de propylène comprenant de 1 % à 3 % d'un agent nucléant et de 2 % à 4 % d'un ester de glycérol.

25. Utilisation selon la revendication 18 ou 19, dans laquelle l'additif réducteur d'adhésion est un amide d'acide gras.

26. Utilisation selon la revendication 25, dans lequel l'amide d'acide gras est un stéaramide ou un érucamide.

27. Utilisation selon la revendication 25, dans laquelle l'amide d'acide gras est l'éthylène-bis-stéaramide.

28. Utilisation selon l'une quelconque des revendications précédentes, dans laquelle la couche superficielle a une épaisseur dans la gamme de 0,2 mm à 2,0 mm.

29. Utilisation selon l'une quelconque des revendications précédentes, dans laquelle le rapport du diamètre extérieur du tuyau à l'épaisseur de la couche superficielle est de 100 à 800.

30. Utilisation selon l'une quelconque des revendications précédentes, dans laquelle la résistance (en N par mm de largeur) de la couche superficielle dépasse la résistance au décollement (en N par mm de largeur) de la liaison adhésive entre la couche superficielle amovible extérieure et l'âme intérieure.

31. Tuyau en matière plastique qui comprend une âme intérieure et une couche superficielle amovible extérieure qui y est collée,
la couche superficielle amovible extérieure comprenant un polymère choisi pour ses propriétés physiques et mécaniques,
la couche superficielle comprenant aussi un agent nucléant pour le polymère, l'agent nucléant étant présent dans la couche superficielle en quantité telle que l'adhésion de la couche superficielle à l'âme intérieure est suffisante pour empêcher un déplacement relatif indésirable important entre la couche superficielle et l'âme pendant l'installation, mais insuffisante pour empêcher la couche superficielle extérieure d'être enlevée proprement par décollement, au moins aux extrémités du tuyau, et insuffisante pour causer une réduction importante de la résistance au choc de l'âme intérieure,
l'agent nucléant étant un composé organique,
étant entendu que la couche superficielle est essentiellement exempte de colorants bleus.

32. Tuyau en matière plastique selon la revendication 31, dans lequel la résistance de la liaison adhésive entre la couche superficielle et l'âme intérieure est de 0,2 N/mm à 2,0 N/mm, mesurée par un test de décollement au tambour roulant comme décrit dans l'Annexe 1.

33. Tuyau en matière plastique selon la revendication 31 ou 32, dans lequel la résistance de la liaison adhésive entre la couche superficielle et l'âme intérieure est de 0,3 N/mm à 1,5 N/mm, mesurée par un test de décollement au tambour roulant comme décrit dans l'Annexe 1.

34. Tuyau en matière plastique selon l'une quelconque des revendications 31 à 33, dans lequel la résistance de la liaison adhésive entre la couche superficielle et l'âme intérieure est telle que la résistance au choc du tuyau composite est au moins 50 %, de préférence 75 %, de la résistance au choc de l'âme intérieure sans la couche superficielle.

35. Tuyau en matière plastique selon l'une quelconque des revendications 31 à 34, dans lequel l'âme intérieure comprend du polyéthylène.

36. Tuyau en matière plastique selon l'une quelconque des revendications 31 à 35, dans lequel la couche superficielle comprend un homo- ou copolymère de propylène, un copolymère séquencé de propylène, ou un copolymère aléatoire de propylène.

37. Tuyau en matière plastique selon la revendication 36, dans lequel la couche superficielle comprend un copolymère séquencé de propylène.

38. Tuyau en matière plastique selon l'une quelconque des revendications 31 à 37, dans lequel l'âme intérieure comprend du polyéthylène et la couche superficielle comprend un copolymère de propylène, et dans lequel la résistance au choc d'un tuyau de 90 mm de diamètre extérieur ayant un rapport SDR de 17,0 est supérieure à 300 joules, mesurée suivant la méthode de EN 1411 :1996 à une température de -10°C en utilisant un marteau de 90 mm pour frapper sur le tuyau.

39. Tuyau en matière plastique selon l'une quelconque des revendications 31 à 38, dans lequel la quantité d'agent nucléant dans la couche superficielle est de 0,01 % à 8 % en poids.

40. Tuyau en matière plastique selon l'une quelconque des revendications 31 à 39, dans lequel l'agent nucléant est un colorant ou pigment nucléant autre qu'un colorant ou pigment bleu.

41. Tuyau en matière plastique selon la revendication 40, dans lequel l'agent nucléant est un colorant ou pigment organique.

42. Tuyau en matière plastique selon la revendication 41, dans lequel le colorant ou pigment organique est choisi parmi : pigments polycycliques, azo (mono- et di-) et de complexe métallique, anthraquinone, dioxazine, dikéto pyrrolo pyrrole, isoindoline, isoindolinone, périnone, pérylène, quinacridone, quinophtalone, thioindigo, bona lake, sel mono azo, benzimidazolone, diarylide et colorants et pigments diazo.

43. Tuyau en matière plastique selon l'une quelconque des revendications 31 à 39, dans lequel l'agent nucléant comprend un composé organique choisi dans le groupe comprenant : sels carboniques, triphénodithiazine ; sorbitol et acétals de sorbitol ; N',N'-dicyclohexylnaphtalène-2,6-dicarboxamide ; sels d'ester de phosphate et dianhydride pyromellitique.

44. Tuyau en matière plastique selon la revendication 43, dans lequel l'agent nucléant comprend du benzoate de sodium.

45. Tuyau en matière plastique selon l'une quelconque des revendications 31 à 44, dans lequel la taille des particules de l'agent nucléant est de 0,01 µm à 10,0 µm.

46. Tuyau en matière plastique selon l'une quelconque des revendications 31 à 45, dans lequel la couche superficielle comprend un polymère adhésif, un agent nucléant et une quantité appropriée d'un additif réducteur d'adhésion.

47. Tuyau en matière plastique selon la revendication 46, dans lequel l'additif réducteur d'adhésion dans la couche superficielle est présent à raison de 0,5 % à 10 % en poids.

48. Tuyau en matière plastique selon la revendication 46 ou 47, dans lequel l'additif réducteur d'adhésion est un ester d'un alcool polyhydrique.

49. Tuyau en matière plastique selon la revendication 48, dans lequel l'alcool polyhydrique est le glycérol.

50. Tuyau en matière plastique selon la revendication 48 ou 49, dans lequel l'ester est un ester d'acide gras.

51. Tuyau en matière plastique selon l'une quelconque des revendications 48 à 50, dans lequel l'additif réducteur d'adhésion est le mono-stéarate de glycérol.

52. Tuyau en matière plastique selon l'une quelconque des revendications 31 à 51, qui comprend une âme intérieure de polyéthylène et une couche superficielle de copolymère séquencé de propylène comprenant un agent nucléant et de 2 % à 4 % d'un ester de glycérol.

53. Tuyau en matière plastique selon l'une quelconque des revendications 31 à 47, dans lequel l'additif réducteur d'adhésion est un amide d'acide gras.

54. Tuyau en matière plastique selon la revendication 53, dans lequel l'amide d'acide gras est un stéaramide ou un érucamide.

55. Tuyau en matière plastique selon la revendication 53, dans lequel l'amide d'acide gras est un éthylène-bis-stéaramide.

56. Tuyau en matière plastique selon l'une quelconque des revendications 31 à 55, dans lequel la couche superficielle a une épaisseur dans la gamme de 0,2 mm à 2,0 mm.

57. Tuyau en matière plastique selon l'une quelconque des revendications 31 à 56, dans lequel le rapport du diamètre extérieur du tuyau à l'épaisseur de la couche superficielle est de 100 à 800.

58. Tuyau en matière plastique selon l'une quelconque des revendications 31 à 57, dans lequel la résistance (en N par mm de largeur) de la couche superficielle dépasse la résistance au décollement (en N par mm de largeur) de la liaison adhésive entre la couche superficielle amovible extérieure et l'âme intérieure.

59. Procédé pour la production d'un tuyau en matière plastique comprenant une âme intérieure et une couche superficielle amovible intérieure, la couche superficielle amovible extérieure comprenant un polymère choisi pour ses propriétés physiques et mécaniques, et une quantité efficace d'un agent nucléant qui est un composé organique, ledit procédé comprenant les opérations consistant à co-extruder des polymères fondus formant l'âme intérieure et la couche superficielle amovible extérieure au moyen d'une ou plusieurs filières extrudeuses, assembler les polymères fondus et les laisser refroidir de telle sorte que, lors du refroidissement, l'adhésion de la couche superficielle à l'âme intérieure soit suffisante pour empêcher un déplacement relatif indésirable important entre la couche superficielle et l'âme pendant l'installation du tuyau, mais insuffisante pour empêcher la couche superficielle d'être proprement enlevée par décollement, au moins aux extrémités du tuyau, et insuffisante pour causer une réduction importante de la résistance au choc de l'âme intérieure, la couche superficielle étant essentiellement exempte de colorants bleus.

60. Procédé selon la revendication 59, dans lequel les polymères de l'âme intérieure et de la couche superficielle amovible extérieure sont extrudés simultanément et assemblés pendant qu'ils sont encore fondus.

61. Procédé pour fabriquer un joint sur un tuyau en matière plastique selon l'une quelconque des revendications 31 à 58, ou pour assembler deux tels tuyaux en matière plastique, qui comprend le décollement de la couche superficielle de la zone ou des zones du tuyau à assembler, pour exposer une surface propre convenant à l'assemblage par électrofusion, l'installation d'un dispositif d'électrofusion par-dessus la surface ou les surfaces propres du tuyau ou des tuyaux et l'activation du dispositif d'électrofusion pour y faire fondre la zone ou les zones du tuyau ou des tuyaux.
